# EUROPEAN PATENT SPECIFICATION

(11) **EP 3 378 295 B1**
(45) Date of publication and mention of the grant of the patent: **13.11.2019**
(21) Application number: 17382807.0
(22) Date of filing: 29.11.2017
(51) Int. Cl.: A01B 51/00, F16B 5/06, F16B 7/04

(54) **DETACHABLE SYSTEM FOR ASSEMBLING AND JOINING PIECES FOR MOUNTING STRUCTURES AND PARTS THEREOF**
LÖSBARES SYSTEM ZUM ZUSAMMENBAU UND VERBINDEN VON TEILEN FÜR MONTAGESTRUKTUREN UND TEILE DAVON
SYSTÈME DÉTACHABLE POUR ASSEMBLER ET JOINDRE DES PIÈCES POUR STRUCTURES DE MONTAGE ET PIÈCES DE CELLES-CI

(30) Priority: 17.03.2017 ES 201730358
(43) Date of publication of application: 26.09.2018
(73) Proprietor: Santillana Alfonsea, David, 13320 Villanueva de los Infantes (Ciudad Real ) (ES); Santillana Alfonsea, Bautista, 13320 Villanueva de los Infantes (Ciudad Real) (ES); Santillana Alfonsea, Javier, 13320 Villanueva de los Infantes (Ciudad Real) (ES)
(72) Inventor: Santillana Fernandez, Bautista, 13320 Villanueva de los Infantes (Ciudad Real) (ES)
(74) Representative: Herrero & Asociados, S.L.

(56) References cited:
- ES-U- 271 467
- KR-A- 20120 009 365
- US-A- 3 698 489
- US-A- 3 951 214
- US-A1- 2014 060 401

## Description

### Object of the Invention

The present invention relates to a detachable system for assembling and joining pieces for conforming structures and parts thereof, which provides essential novelty characteristics and significant advantages over known means and used for the same purposes in the current state of the art.

More specifically, the invention develops a system in which a set of components intervenes capable of enabling the detachable assembly of structures and the joining of pieces and parts thereof, based on transoms with the various configurations existing in the state of the art (rims, square, tubular, profiles, etc.), manufactured from any material (metal, plastic, wood, chipboard or any other), in an easy, quick and safe manner, without need for welds, glues or similar, significantly simplifying assembly and conferring rigidity and resistance to the structure comparable to those of any equivalent structure obtained using the currently known methods in the current state of the art.

The field of application of the present invention is comprised within the industrial sector dedicated to the design and assembly of structures in general, for applications of any kind.

### Background of the Invention

In the assembly of structures of any kind known in the state of the art, both for permanent installations and for chassis or frames of machines or other types of vehicles, it is normally necessary to join and fix a variable number of pieces and transoms of different types, of different sizes and configurations, to each other for the purpose of conforming and rigidising each structure so that it fulfils the purpose for which it was intended. Depending on the material from which the pieces that must be joined or fixed to each other are made, the application of a technique or weld in the case of metal pieces, or the use of glues and adhesives in the case of wooden, chipboard, plastic or similar pieces, is known.

Evidently, the techniques used for fixing and joining pieces, once assembled therebetween, used in conventional structures, are generally effective and fulfil the joining objectives for which they were created.

However, it is a generally known fact that operations for joining pieces assembled therebetween are usually expensive, require time and, therefore, entail considerable costs. Such is the case of, for example, welding operations requiring expert personnel qualified to apply the welding technique, together with appropriate equipment for such purpose, with the peculiarity that joining and fixing together pieces must normally be carried out at the workshop, therefore requiring transport of the structure (or the part of the structure) to the application site or, if the assembly and fixation of the pieces can be carried out in the field, then it is the welding equipment that must be moved, with the ensuing costs. Such is the case when trying to join non-metal pieces using glues and adhesives which, in addition to the aforementioned drawbacks, also requires allowing sufficient time to elapse for curing the glue or adhesive. Documents ES 271 467 U, KR 2012 0009365 A and US 2014/060401 A1 relate to known detachable systems with sets of components containing transoms for assembling and joining pieces for mounting structures for agricultural machines.

### Summary of the Invention

Taking the foregoing into account, and in the specific case of building a structure, or a part of a structure, where, for example, one or more transoms that must be joined and fixed to other components of the structure intervene, it would be desirable to have means that will allow a quick and safe join between said transoms and the corresponding components of the structure.

The foregoing objective was achieved by means of the detachable system for assembling and joining pieces for conforming structures and parts thereof that constitutes the object of the present invention and wherein a set of basic components that can be adapted to any need intervenes, with the peculiarity that such components are separate, independent elements, which, can be quickly and easily transported to the assembly site, thereby optimising the assembly operations both from the viewpoint of timing and from the viewpoint of costs.

In essence, the set of components considered in the system proposed by the invention includes, in addition to the transoms themselves (one or more transoms), multiple generally flat support plates, with configurations adapted to each need, and anchoring and mooring plates consisting of generally flat pieces capable of joining the support plates and transoms to each other.

In an example of embodiment, the generally flat support plates have one or more passthrough holes (as many as the transoms that must be supported) adapted to the shape and dimensions of the transoms, which enable the tight-fitting insertion of the latter and also the housing of one end of one of the anchoring and mooring plates, for which purpose the hole of each of the support plates has a recessed portion in two diametrically opposed and, therefore, mutually confronting positions, and each anchoring and mooring plate has corresponding lateral slits next to each of their longitudinal ends, to house the walls of the edges of the passthrough hole when the anchoring and mooring plate is housed in the recessed portion corresponding to the respective hole. The anchoring and mooring plates have one or more holes, threaded or not, for the passage of screws which in turn penetrate the transom through holes made for such purpose, thereby achieving the binding union between the support plates and the transoms.

In a preferred application of the invention, the described system is especially applicable to the case of the structure of a tree trunk vibrator arm for releasing fruit, such that on one end part of the structure is connected to the arms of the tractor loader and, on the other end, the structure is connected to an umbrella that intercepts the fruit released as a result of the vibration.

### Brief Description of the Drawings

These and other characteristics and advantages of the invention will be more obvious from the following detailed description of a preferred embodiment thereof, provided only by way of non-limiting illustration with reference to the accompanying drawings, wherein:
Figure 1 shows a schematic representation of some of the basic components envisaged by the assembly included in the system for assembling and joining pieces of the invention, together with a detail shown at larger scale and indicated with the reference "D";
Figure 2 shows an exploded perspective schematic view of an example of the part of the detachable structure obtained from the use of components such as those shown in Figure 1; and
Figure 3 shows a schematic representation of an example of part of the detachable structure obtained from the assembly of components of Figure 2.

### Description of the Preferred Embodiment

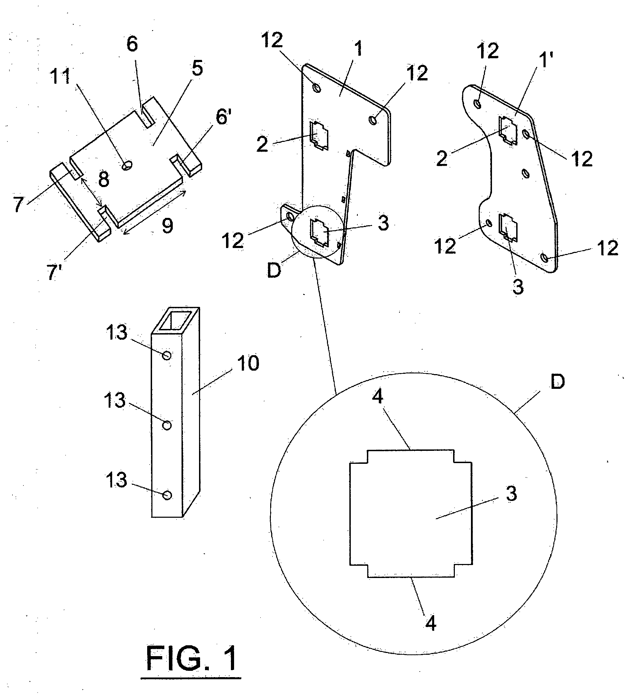

As mentioned earlier, the detailed description of the preferred embodiment of the object of the invention will be made below with the help of the annexed drawings, through which the same numerical references are used as those used to designate identical or similar parts. Thus, firstly considering Figure 1 of the drawings, various schematic views of examples of basic components of the type included in the assembly comprised in the assembly and joining system of the present invention can be observed. Thus, two examples of support plates 1, 1', generally flat, configured for joining transoms of the structure, having different configurations but based on a single design concept can be observed. That is, in the example of embodiment represented, it has been envisaged that each of the support plates 1, 1' will have two passthrough holes 2, 3, in respectively coincident positions, to permit the passage of other transoms 10. As mentioned earlier, the transoms may have different cross-sections: square, rectangular, circular, elliptical, etc., being the shapes and sizes of the holes of passage 2, 3 equivalent to the shapes of the transoms and with dimensions such as to permit the tight-fitting passage of the transom, i.e. with slight clearance. In the example represented, the cross-section of the transom 10 is quadrangular (square or rectangular), due to which the description will be made based on this cross-section shape, although it must be made clear that the explanation is equally valid for any other configuration.

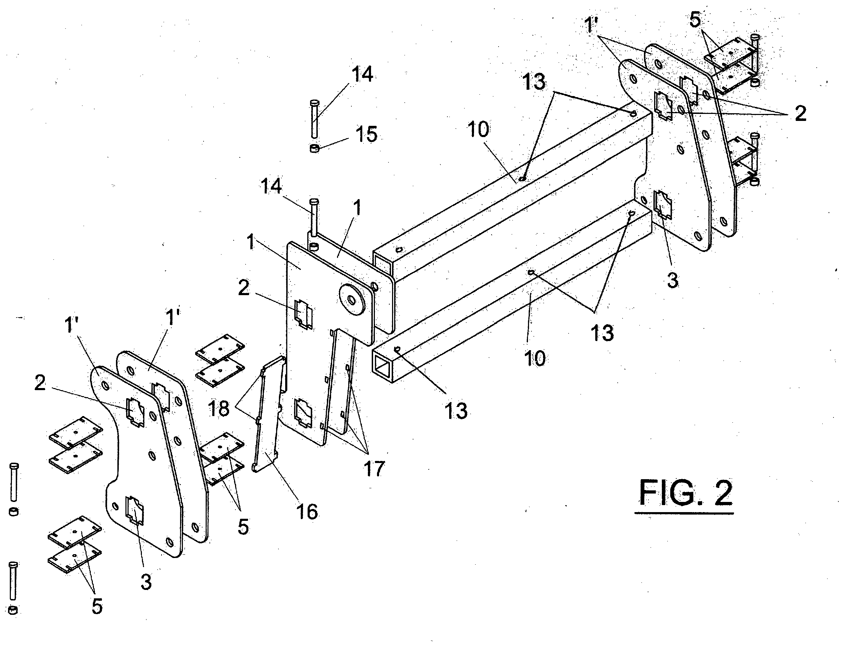

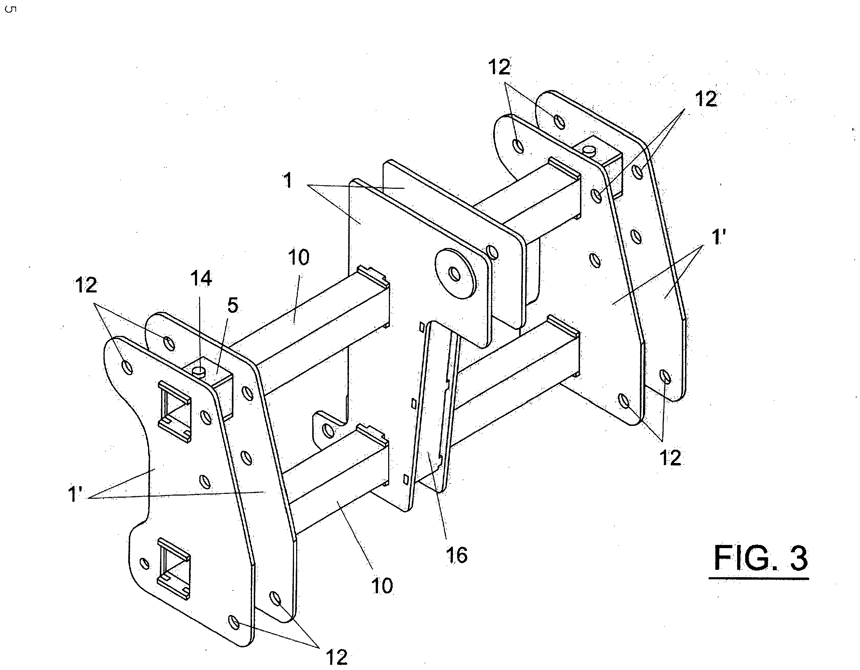

As can be observed in the detail "D" at larger scale, hole 3 is, as mentioned earlier, quadrangular in general, with two recessed portions 4, corresponding to two opposite sides, in confronting positions. These recesses 4 are dimensioned, in width and height, in accordance with the dimensions of an anchoring and mooring plate 5, generally flat, consisting of a sheet made of metal or other appropriate material, with a thickness equivalent to the height of the recess 4 and having pairs of slits 6, 6'; 7, 7' in close proximity to both longitudinal ends, directed from the lateral edges towards the interior, all having identical dimensions and with those of each pair confronting each other. The slits 6, 6'; 7, 7' are made in such a manner that the transversal distance 8 between those of each pair is equivalent to the width of each recess 3, and the longitudinal distance 9 between the slits 6, 7 or 6, 7' of each side signals the separation between the support plates 1, 1', as will be seen subsequently with respect to Figures 2 and 3. The anchoring and mooring plate 5 includes one or more holes 11, in centred positions, which may be threaded for fixing anchoring screws or may simply be passthrough holes.

Likewise, the support plates 1, 1' also include other passthrough holes 12, in various positions on its surface, while each transom 10 also includes passthrough holes 13 in positions envisaged to confront the holes 11 of the anchoring and mooring plates 5.

Having described the types of basic components envisaged in the assembly that intervenes in the joining and assembly system of the present invention, reference will be made to Figure 2, which shows an exploded view of a specific example of embodiment of part of a structure for any one application. The exploded view shown as an example of embodiment in Figure 2 clearly expresses the manner in which to combine the different components for being detachably joined to two transoms 10, for which, as in the example of embodiment of components shown in Figure 1, the support plates 1 and 1' are applied in pairs, parallel and separated therebetween by a distance equivalent to the longitudinal distance 9 of the anchoring and mooring plates 5. The configuration and size of the passthrough holes 2, 3 are equivalent to those shown in the cross-section by the transoms 10, said passthrough holes 2, 3 having a configuration equal to that shown in the detail "D" of Figure 1, and wherein the anchoring and mooring plates 5 are applied in pairs in each of the holes 2, 3 of the support plates 1, 1', such that they are housed in the confronting recesses 4 of each hole, and the lateral edges of each of said recesses are housed in the pairs of slits 6, 6'; 7, 7' of each plate. In this example, screws 14 have been envisaged to make them pass through the holes 11 of the plates 5 in correspondence with the holes 13 of each transom 10, and nuts 15 for the definitive fixation of each screw 14. Naturally, the screws 14 can be replaced by pins, bolts or any other anchoring means. Figure 2 also includes an example of a support plate 16, dimensioned to be incorporated between the pairs of support plates 1, to which end said support plates may include holes 17 next to, at least, one of the outer edges, to permit the insertion of lugs 18 projecting from both lateral edges of the separator plate 16 and coplanar with said separator plate.

At this point of the description, it should be clarified that in the example of embodiment on which the present description is based, the case of a structure in which two transoms 10 intervene has been assumed. As it will be understood, the use of two transoms 10 is solely illustrative and not limiting, and the number of transoms may be any amount between one, two o more, depending on the needs of each type of application, in which case the support plates 1, 1' will be appropriately dimensioned and designed with a number of passthrough holes 2, 3 coincident with the number of transoms 10 used.

With regard to Figure 3 of the drawings, a schematic representation of one part of the detachable structure obtained by the coupling and assembly of the components of the system shown in Figure 2 can be observed. In the example represented, the parallel layout of the pairs of plates 1, 1', coupled to the transoms 10 and joined together by means of the anchoring and mooring plates 5, with the screws 14 applied through the holes 11 of the plates 5 coinciding with the holes 13 of the transoms 10, and with the separator plate 6 placed between the two support plates 1 disposed in a central position.

As it will be understood, the separation between pairs of plates 1, 1' can be carried out using multiple elements existing in the state of the art (bolts, pins, studs, etc.), coupled in a known manner to the holes 12 of the pairs of support plates 1, 1'.

The foregoing description explains the necessary sequence for the assembly system of the structure obtained from a set of basic components such as those shown in Figure 1 of the drawings, wherein the final join between components is carried out with the sole application of screws 14 (and, eventually, nuts 15), threaded or, as appropriate, simply inserted in the holes 11 of the anchoring and mooring plates 5 once confronting the holes 13 of the transoms. As it will be understood, the disassembly operation of the set of components of the system is equally simple and fast, for which it suffices to remove the screws 14, whereupon it is possible to separate all the components therebetween.

The foregoing describes, solely by way of illustration and in no case in a limiting manner, a preferred embodiment of a set of components for configuring the system designed for assembling a structure of any kind, wherein a case in which the different pieces have been manufactured from metal has been assumed. This only constitutes one example of embodiment, since all the pieces may be manufactured from other materials (wood, chipboard, plastic, etc.) or the possibility of mixing components of different materials can be considered, as appropriate for each specific application.

As it will be understood, a detachable system in which a set of components for joining pieces belonging to structures of any kind, or parts thereof intervenes, designed, intended for and used in accordance with the foregoing explanations, provide countless advantages over the systems of the current art, which by way of example include, namely, the following:
- Economy due to time savings: less time is spent on assembling the components of the assembly since, due to the interlock and screw philosophy enables significant time savings compared to conventional processes, due to not having to make use of equivalent welds or techniques. Additionally, handling of the entire set implies less effort for the operators, the assembly of which is achieved in a few minutes.
- Economy due to savings in materials: with respect to welding, saves on the need to use appropriate equipment and also saves on the cost of welding rods and, although screws are used in the assembly of the invention, it is clear that they are normal screws and, therefore, their cost is negligible compared to the cost of using welding rods;
- Economy due to logistics savings: the fact that the components of the assembly are separate and independent elements enables all the components to remain stored in a stacked manner, with optimum use of storage space until the time of assembly; and
- Possibility of giving the components of the system any type of finish, such as paint or any type of surface treatment (chromium plating, zinc plating, nickel plating, epoxy, etc.), given the ease of separate handling of the components with respect to the difficulty of handling complex structures, once assembled and finished.

It is not deemed necessary to further extend the content of the present description for a person skilled in the art to understand its scope and the advantages derived therefrom, in addition to carrying out the practical embodiment of its object.

Notwithstanding the foregoing and given that the description made corresponds solely to one preferred embodiment of the invention, it will be understood that, within its essentiality, multiple variations in detail may be introduced, also protected, that may affect the shape, size or the manufacturing materials of the assembly or of its parts, without implying any alteration or the invention as a whole, delimited solely by the claims provided hereunder.

## Claims

1. A detachable system for assembling and joining pieces for mounting structures and parts thereof, wherein the system includes a set composed of a plurality of components capable of being detachably assembled into structures of any kind, and parts thereof, containing transoms, **characterised in that** said set of components of the system includes the following basic elements:
- pairs of support plates (1, 1'), generally flat, designed with one or more passthrough holes (2, 3) conformed in accordance with the formal characteristics (square, rectangular, circular, elliptical) of other transoms (10) to be received, and dimensioned to house, with slight clearance, the aforementioned transoms (10), wherein each passthrough hole (2, 3) has, in two confronting and diametrically opposed positions, a respective recess (4) with a previously established width and height;
- anchoring and mooring plates (5), consisting of generally flat pieces which, in the proximity of each of its ends, have pairs of slits (6, 6'; 7, 7'), extending from each lateral edge towards the interior and respectively confronting those of each pair, determining a distance (8) in a transversal direction between those of each pair (6, 6'; 7, 7') and a distance (9) in a longitudinal direction between the slits (6, 7; 6', 7') of each side, of known values, wherein each of the anchoring and mooring plates (5) also includes one or more holes (11) in centred, threaded or non-threaded positions; and
- wherein the transoms (10) include a variable number of passthrough holes (13) intended to confront the respective holes (11) of the anchoring and mooring plates (5) in each of the positions.

2. A system according to claim 1, **characterised in that** the transversal distance (8) between the pairs of slits (6, 6'; 7, 7') of each of the anchoring and mooring plates (5) equivalent to the width of each of the recesses (4) made in the passthrough holes (2, 3) of the support plates (1, 1'), while the thickness of each plate (5) is equivalent to the height of each of said recesses (4).

3. A system according to claims 1 and 2, **characterised in that** the pairs of support plates (1, 1') are separated therebetween by a distance equivalent to the distance (9) between the slits (6, 7; 6', 7') on each side of the anchoring and mooring plates (5).

4. A system according to claims 1 to 3, **characterised in that** the support plates (1, 1') have holes (12) in various positions on its surface, intended to receive separator elements such as bolts, pins or studs, and also holes (17) in relation to one of its edges to maintain a separator plate (16) through the insertion of lugs (18) coplanarly projecting from said separator plate (16) by its lateral edges, in the aforementioned holes (17).

5. A system according to claims 1 to 4, **characterised in that** the different components can be manufactured from materials such as metal, wood, chipboard and plastic, or even combine components of various of these materials.

## Patentansprüche

1. Lösbares System zum Zusammenbauen und Verbinden von Teilen für Montagestrukturen und Teile davon, wobei das System ein Set aufweist, dass aus einer Vielzahl von Komponenten besteht, die lösbar in Strukturen jeglicher Art zusammengebaut werden können, und Teile davon, darunter Querträger, **dadurch gekennzeichnet, dass** das Komponentenset des Systems die folgenden Basiselemente aufweist:
- Paare von Trägerplatten (1, 1'), im Allgemeinen flach, die mit einem oder mehreren Durchgangslöchern (2, 3) versehen sind, entsprechend den Formmerkmalen (quadratisch, rechteckig, kreisförmig, elliptisch) anderer zu empfangender Querträger (10), und die derart dimensioniert sind, dass sie, mit geringem Abstand, die vorgenannten Querträger (10) aufnehmen, wobei jedes Durchgangsloch (2, 3) in zwei gegenüberliegenden und diametral entgegengesetzten Positionen eine entsprechende Aussparung (4) mit einer zuvor festgelegten Breite und Höhe aufweist;
- Verankerungs- und Befestigungsplatten (5), die aus im Allgemeinen flachen Teilen bestehen, die, in der Nähe jeder ihrer Enden, Paare von Schlitzen (6, 6', 7, 7') aufweisen, die sich von jeder seitlichen Kante nach Innen erstrecken und jeweils den Schlitzen jedes Paares gegenüberliegen, und die einen Abstand (8) in einer transversalen Richtung zwischen den Schlitzen jedes Paares (6, 6', 7, 7') und einen Abstand (9) in einer Längsrichtung zwischen den Schlitzen (6, 7, 6', 7') jeder Seite aus bekannten Werten bestimmen, wobei jede der Verankerungs- und Befestigungsplatten (5) ferner ein oder mehrere Löcher (11) in zentrierten, mit Gewinde oder ohne Gewinde versehenen Positionen aufweist; und
- wobei die Querträger (10) eine variable Anzahl von Durchgangslöchern (13) aufweisen, die dazu bestimmt sind, den jeweiligen Löchern (11) der Verankerungs- und Befestigungsplatten (5) in sämtlichen Positionen gegenüberzuliegen.

2. System nach Anspruch 1, **dadurch gekennzeichnet, dass** der transversale Abstand (8) zwischen den Paaren von Schlitzen (6, 6', 7, 7') sämtlicher Verankerungs- und Befestigungsplatten (5) gleich der Breite sämtlicher Ausnehmungen (4) ist, die in den Durchgangslöchern (2, 3) der Trägerplatten (1, 1') ausgebildet sind, während die Dicke jeder Platte (5) gleich der Höhe sämtlicher Ausnehmungen (4) ist.

3. System nach Anspruch 1 oder 2, **dadurch gekennzeichnet, dass** die Paare von Trägerplatten (1, 1') in einem dazwischenliegenden Abstand getrennt sind, der gleich dem Abstand (9) zwischen den Schlitzen (6, 7, 6', 7') auf jeder Seite der Verankerungs- und Befestigungsplatten (5) ist.

4. System nach Anspruch 1 bis 3, **dadurch gekennzeichnet, dass** die Trägerplatten (1, 1') Löcher (12) in unterschiedlichen Positionen auf deren Oberfläche aufweisen, die dazu bestimmt sind, Trennelemente wie Bolzen, Stifte oder Zapfen zu empfangen, und auch Löcher (17) in Bezug zu einer ihrer Kanten aufweisen, um eine Trennplatte (16) aufrechtzuerhalten, indem Vorsprünge (18), die komplanar von der Trennplatte (16) an deren seitlichen Kanten hervorstehen, in die vorgenannten Löcher (17) eingesetzt werden.

5. System nach Anspruch 1 bis 4, **dadurch gekennzeichnet, dass** die unterschiedlichen Komponenten aus Materialien wie Metall, Holz, Spannplatte und Kunststoff oder aus einer Kombination verschiedener dieser Materialien hergestellt werden können.

## Revendications

1. Système amovible permettant d'assembler et de relier des pièces destinées à monter des structures et des parties de celles-ci, dans lequel le système comprend un ensemble composé d'une pluralité de composants pouvant être assemblés de manière amovible en structures de tout type, et de parties de celles-ci, contenant des traverses, **caractérisé en ce que** ledit ensemble de composants du système comprend les éléments de base suivants :
- des paires de plaques de support (1, 1'), généralement plates, conçues avec un ou plusieurs trous de passage (2, 3) conformés selon les caractéristiques formelles (carrés, rectangulaires, circulaires, elliptiques) d'autres traverses (10) à recevoir, et dimensionnées pour loger, avec un léger jeu, les susmentionnées traverses (10), où chaque trou de passage (2, 3) présente, dans deux positions opposées et diamétralement opposées, un évidement respectif (4) correspondant à une largeur et hauteur préalablement déterminées ;
- des plaques d'ancrage et d'amarrage (5), constituées de pièces généralement plates qui, à proximité de chacune de leurs extrémités, présentent des paires de fentes (6, 6' ; 7, 7') s'étendant de chaque bord latéral vers l'intérieur et faisant face respectivement à celles de chaque paire, déterminant une distance (8) dans une direction transversale entre celles de chaque paire (6, 6' ; 7, 7') et une distance (9) dans une direction longitudinale entre les fentes (6, 7 ; 6', 7') de chaque côté, de valeurs connues, où chacune des plaques d'ancrage et d'amarrage (5) comprend également un ou plusieurs trous (11) en positions centrées, filetées ou non filetées ; et
- dans laquelle les traverses (10) comprennent un nombre variable de trous de passage (13) destinés à faire face aux trous respectifs (11) des plaques d'ancrage et d'amarrage (5) dans chacune des positions.

2. Système selon la revendication 1 , **caractérisé en ce que** la distance transversale (8) entre les paires de fentes (6, 6' ; 7, 7') de chacune des plaques d'ancrage et d'amarrage (5) est équivalente à la largeur de chacun des évidements (4) pratiqués dans les trous de passage (2, 3) des plaques de support (1, 1'), l'épaisseur de chaque plaque (5) étant équivalente à la hauteur de chacun desdits évidements (4).

3. Système selon les revendications 1 et 2, **caractérisé en ce que** les paires de plaques de support (1, 1') sont séparées entre elles par une distance équivalente à la distance (9) entre les fentes (6, 7 ; 6', 7') de chaque côté des plaques d'ancrage et d'amarrage (5).

4. Système selon les revendications 1 à 3, **caractérisé en ce que** les plaques de support (1, 1') présentent sur leur surface des trous (12) en différentes positions, destinés à recevoir des éléments séparateurs tels que des boulons, des chevilles ou des goujons, ainsi que des trous (17) en relation avec un de ses bords pour maintenir une plaque de séparation (16) par insertion de languettes (18) dépassant de manière coplanaires de ladite plaque de séparation (16) par ses bords latéraux, dans les trous (17) mentionnés ci-dessus.

5. Système selon les revendications 1 à 4, **caractérisé en ce que** les différents composants peuvent être fabriqués à partir de matériaux tels que le métal, le bois, l'aggloméré et le plastique, ou même combiner des composants de divers de ces matériaux.
